# EUROPEAN PATENT SPECIFICATION

(11) **EP 3 760 032 B1**
(45) Date of publication and mention of the grant of the patent: **09.06.2021**
(21) Application number: 20183562.6
(22) Date of filing: 01.07.2020
(51) Int. Cl.: A01F 15/08

(54) **VARIABLE CHAMBER BALER**
BALLENPRESSE MIT VARIABLER KAMMER
PRESSE À BALLES À CHAMBRE VARIABLE

(30) Priority: 02.07.2019 GB 201909537
(43) Date of publication of application: 06.01.2021
(73) Proprietor: Kuhn-Geldrop B.V., 5667 KP Geldrop (NL)
(72) Inventor: Tenbult, Henricus, Theodorus, Hubertus, 5531KL Bladel (NL)
(74) Representative: Raynor, Simon Mark

(56) References cited:
- EP-A1- 0 402 659
- EP-A1- 3 031 317
- US-A1- 2009 314 067

## Description

The present invention relates to a variable chamber baler for baling agricultural crop material, and to a method of baling. The baler may for example be similar in certain respects to that described in EP0402659.

Balers for making cylindrical (or "round") bales of agricultural crop material are well known and include types known as fixed chamber balers, which include a set of compression rollers that define a bale forming zone of fixed size, and variable chamber balers, in which a bale forming zone is defined by one or more flexible elongate compression elements, for example belts or a chain and slat mechanism, as is well known in the art. In variable chamber balers the bale forming zone defined by the flexible elongate compression elements increases in size as the bale is formed within the bale chamber.

The present invention relates to a variable chamber baler. For the sake of simplicity in the present document each flexible elongate compression element will be referred to as a "belt" and this term is intended to encompass all types of elongate flexible compression element used in variable chamber balers, including conventional rubber belts and chain and slat mechanisms.

Typically, a variable chamber baler includes a pick up mechanism that gathers cut agricultural crop material from the ground and feeds the material into the bale chamber. The bale chamber typically includes a set of belts that are arranged side by side and trained around a set of rolls. Bale material is fed into a bale forming zone and the belts are driven to form a cylindrical bale by rotating and compressing the bale material. As more crop material is fed into the bale chamber the bale grows and the bale forming zone increases in size to accommodate the expanding bale. When the bale has reached the desired size, feeding is stopped and the bale is bound by feeding a binding material (for example netting, film or twine) into the bale chamber and wrapping it around the circumference of the bale. After binding, a tailgate in the rear of the baler opens and the finished bale is ejected from the bale chamber onto the ground.

A variable chamber round baler is described for example in EP0402659. This baler includes a hydraulically actuated belt tensioner, which can be actuated to adjust the tension in the belts, thereby controlling the density of the bale. The tension can be increased to increase the density of the bale or it can be decreased at the start of the bale forming process to make a bale with a softer, less dense core.

It is known from the prior art that the tension of the belts will determine the density of the bale that is formed. The mechanism used in the belt tensioner determines the tension of the belt during the bale growth. If a simple spring belt tensioner is used the tension will generally increase with the diameter of the bale.

It is known that the tensioning system can be controlled by a hydraulic system.

It is also known that the control of the density can be such that the core of the bale (formed at the start of the baling process) can be reduced in order to provide a soft bale core.

Also, it is known that baler can be equipped with a moisture sensor to sense the moisture content of the bale material. A variable chamber baler that includes a moisture sensor and a control device that controls the belt tension according to a moisture signal received from the moisture sensor is described in EP3031317A1.

It is known that by increasing the bale tension the power consumption of the baler will increase, sometimes excessively.

It is also known that the operator can adjust and choose between several predetermined control regimes to adjust the belt tension for different material characteristics.

The applicant has found that the tension of the belts at bale start of the bale growth can give a negative impact on the bale shape (for example, a lack of roundness).

It can also be difficult or onerous for the operator to select an appropriate control regime, particularly where the characteristics of the bale material change during an extended baling operation.

It is an object of the present invention to provide a variable chamber baler and a method of baling that overcomes or mitigates one or more of the aforesaid disadvantages.

According to one aspect of the present invention there is provided a variable chamber baler comprising:
- a bale chamber;
- a feed mechanism that feeds bale material into the bale chamber;
- at least one belt that defines a bale forming zone within the bale chamber, wherein bale material is rotated and compressed by the belt within the bale forming zone to form a bale;
- a belt tensioner that controls tension within the belt;
- a control device connected to the belt tensioner and configured to control operation of the belt tensioner to adjust the tension of the belt during formation of a bale, the control device comprising a plurality of predetermined belt tension regimes that define alternative relationships between the belt tension and the size of the bale in the bale forming zone during formation of a bale; and
- a moisture sensor that senses moisture content of the bale material;
- wherein the control device receives a moisture content signal from the moisture sensor and selects and implements one of the predetermined belt tension regimes according to the received moisture content signal.

A baler according to this aspect of the invention is able to adapt itself automatically to the moisture content of the bale material, to ensure that an appropriate belt tension regime is selected and implemented during formation of the bale. For example, if the bale material has a high moisture content (e.g. if it consists of a silage crop), the belt tension may be set to a relatively low level at least at the start of the bale forming process to ensure that the finished bale has an even shape, whereas if the bale material has a low moisture content (e.g. if it consists of straw or hay), the belt tension may be set to a relatively high level ensuring a high bale density.

A baler according to the present invention is able to change the selected belt tension regime automatically in response to changes in the sensed moisture level, for example when the baler moves from one part of a field to another where the crop that forms the bale material has different growth characteristics. This helps to ensure that the baler always operates according to an appropriate belt tension regime, without requiring any intervention by the operator. In this way, the quality of the bale can be improved, excessive use of binding material can be avoided and the energy consumption of the baler can be optimised.

In addition to setting the initial belt tension, the predetermined belt tension regimes can be designed to adjust the belt tension as the size of the bale increases during a bale forming operation, according to the required characteristics of the bale. Some examples of different belt tension regimes are provided below.

In an embodiment of the invention the controller is configured automatically to choose between different predetermined belt tension regimes so as to provide an optimal density of the bale in relation to the power consumption of the baler and/or to control the shape of the bale based on the moisture content as sensed by the moisture sensor.

The predetermined belt tension regimes may optionally include for example controlling and/or adjusting the belt tension from the start of the bale growth, and/or at the end of the bale growth, and/or at one or more intermediate points between the start and end of bale growth, according to the size of the bale.

Optionally, the sensed moisture content value at which a decision is made for selecting an appropriate belt tension regime can be adjusted by the operator and/or automatically by the baler.

In an embodiment the average moisture content of one or more previous bales may optionally be taken as a basis for the decision on which predetermined belt tension regime is chosen. Using the average moisture content of one or more previous bales provides a well-founded basis for selecting a belt tension regime, whereas taking the moisture content of the actual material as it is fed into the bale chamber could make the system unstable as the moisture content might change during the bale growth.

In one optional belt tension regime, the starting tension of the belts will be low when the bale material has a high moisture content, to provide a more flexible core. This can address an issue with crop materials having a high moisture content, such as silage, which can form lumps. The more flexible core allows it to any absorb lumps of crop material that are added to the bale at to ensure that the bale does not become irregular in shape as it increases in size.

In another optional belt tension regime, the starting tension of the belts is high when the moisture content is low, for example where the bale material comprises straw or hay. This will result in heavy and dense bales for this dry material, and therefore a provides high quantity of bale material per bale.

In another optional belt tension regime, the belt tension at the start of the bale forming process is equal to or higher than the belt tension at the end of the bale forming process, so as to obtain the maximum quantity of material in the bale for a given final bale diameter.

This is advantageous because the bale material on the outer periphery of the bale helps to hold in the high density inner bale material, because the outer bale material is wrapped around the core of the bale. By comparison, if high density bale material is provided on the outer periphery of the bale, this material has to be held under high density by the binding material (e.g. net, film or twine) and the amount of binding material has to be increased, resulting in high costs. Providing a high density of bale material in the core and a lower density in the periphery of the bale can therefore be more economical than providing a high density throughout the entire diameter of the bale.

In another optional belt tension regime that is suitable for high moisture content bale material, a relatively lower belt tension may be provided at the start of the bale forming process and the belt tension may increase as the diameter of the bale increases, up to a relatively high value at the maximum bale diameter. The increase in belt tension could be gradual, for example increasing continuously in proportion to the diameter of the bale, or the belt tension could be increased incrementally (stepwise) in one or more steps, or the belt tension could be increased in a mix of both continuous and incremental stages. The bale diameter value or values at which the increases in belt tension are implemented could be adjusted by the operator or automatically.

Preferably some or all of the predetermined bale tension regimes are capable of being programmed, adjusted or modified by the operator.

Optionally, the control device is configured to adjust the tension of the belt substantially continuously during formation of a bale.

Optionally, the control device is configured to adjust the tension of the belt incrementally during formation of a bale.

Optionally, the control device is configured to adjust the tension of the belt according to the size of the bale (for example, the diameter or the circumference of the bale).

Optionally, the baler includes a bale size detector that generates a bale size signal, wherein the control device is connected to receive the bale size signal and is configured to adjust the tension of the belt according to the bale size signal. The bale size detector may be configured to detect the size of the bale indirectly, for example by sensing the position of a component of the bale chamber, e.g. the belt tensioner or a pivotable arm that carries a belt roller, or it may sense the size of the bale directly, for example by sensing the location of the periphery of the bale.

Optionally, the moisture sensor senses the moisture content of the bale material within the bale forming zone. Preferably, the moisture sensor is located at a position where it is always within the bale forming zone, regardless of the size of the bale forming zone. For example, the moisture sensor may be located in a lower part of the bale forming zone, optionally close to the feed opening where bale material is fed into the bale chamber.

Optionally, the moisture sensor senses the moisture content of the bale material at the start of the bale forming process and the control device selects and implements one of the predetermined belt tension regimes according to the moisture content of the bale material at the start of the bale forming process.

Optionally, the moisture sensor senses the moisture content of the bale material at an intermediate time between the start and the finish of the bale forming process and the control device selects and implements one of the predetermined belt tension regimes according to the moisture content of the bale material at the intermediate time.

Optionally, the control device determines an average moisture content value from the received moisture content signal, and selects and implements one of the predetermined belt tension regimes according to the average moisture content value.

Optionally, the control device stores a moisture content value based on the moisture content signal received during formation of a first bale, and subsequently during formation of a second bale selects and implements one of the predetermined belt tension regimes according to the stored moisture content value.

Optionally, the control device determines an average moisture content value from the moisture content signal received during formation of a first bale, and subsequently during formation of a second bale selects and implements one of the predetermined belt tension regimes according to the average moisture content value. The term "a first bale" as used herein is intended to encompass either a single bale or a plurality of bales that are formed prior to formation of the second bale.

Optionally, the predetermined belt tension regimes include a low-start regime wherein the belt tension is set at a relatively low value during an initial phase of the bale forming operation, and is subsequently increased to a higher value.

Optionally, the low-start regime is selected and implemented when the sensed moisture content is relatively high.

Optionally, the low-start regime is selected and implemented when the sensed moisture content exceeds an adjustable predetermined value, which is selected by the operator and is adjustable in the range 30-55%, typically for example 40%.

Optionally, the belt tension is increased during the bale forming operation in proportion to the diameter of the bale.

Optionally, the predetermined belt tension regimes include a high-start regime wherein the belt tension is set at a relatively high value during an initial phase of the bale forming operation, and is subsequently decreased to a lower value.

Optionally, the high-start regime is selected and implemented when the sensed moisture content is relatively low.

Optionally, the high-start regime is selected and implemented when the sensed moisture content is less than an adjustable predetermined value, which is selected by the operator and is less than 30-55%, typically for example less than 40%. This is to allow high density baling, but is only suitable for relatively dry bale material or dry material, for example straw or hay, which typically has a moisture content of less than 17%.

Optionally, the belt tension is adjusted during at least part of the bale forming operation in inverse relationship to the diameter of the bale. In other words, the belt tension decreases as the bale size increases.

Optionally, the control device includes an operator interface that enables an operator to select one or more operating parameters of the control device, wherein said operating parameters include one or more of:
- a relationship between the size of the bale in the bale forming zone and the tension in the belt;
- a relationship between the detected moisture content value and the selection of the operating regime by the control device;
- a maximum allowed value for the tension in the belt;
- a relationship between the power consumption of the baler and the tension in the belt.

According to another aspect of the invention there is provided a method of forming a bale in a variable chamber baler that comprises a bale chamber, a feed mechanism that feeds bale material into the bale chamber, at least one belt that defines a bale forming zone within the bale chamber, a belt tensioner that controls tension within the belt, a control device that controls operation of the belt tensioner to adjust the tension of the belt, and a moisture sensor that senses moisture content of the bale material, the method comprising:
- feeding bale material into the bale chamber,
- rotating and compressing the bale material within the bale forming zone to form a bale;
- sensing the moisture content of the bale material;
- and selecting and implementing one of a plurality of predetermined belt tension regimes that define alternative relationships between the belt tension and the size of the bale in the bale forming zone according to the sensed moisture content.

Optionally, the method includes adjusting the tension of the belt substantially continuously during formation of a bale.

Optionally, the method includes adjusting the tension of the belt incrementally during formation of a bale.

Optionally, the method includes detecting the size of the bale in the bale forming zone and adjusting the tension of the belt according to the bale size.

Optionally, the method includes sensing the moisture content of the bale material within the bale forming zone.

Optionally, the method includes sensing the moisture content of the bale material at the start of the bale forming process and selecting and implementing one of the predetermined belt tension regimes according to the sensed moisture content at the start of the bale forming process.

Optionally, the method includes sensing the moisture content of the bale material at an intermediate time between the start and the finish of the bale forming process and selecting and implementing one of the predetermined belt tension regimes according to the sensed moisture content at the intermediate time.

Optionally, the method includes determining an average moisture content value from the received moisture content signal, and selecting and implementing one of the predetermined belt tension regimes according to the average moisture content value.

Optionally, the method includes storing a moisture content value based on the moisture content signal received during formation of a first bale, and subsequently during formation of a second bale selecting and implementing one of the predetermined belt tension regimes according to the stored moisture content value.

Optionally, the method includes implementing a low-start belt tension regime wherein the belt tension is set at a relatively low value during an initial phase of the bale forming operation, and is subsequently increased to a higher value.

Optionally, the low-start regime is selected and implemented when the sensed moisture content is relatively high.

Optionally, the method includes implementing a high-start regime wherein the belt tension is set at a relatively high value during an initial phase of the bale forming operation, and is subsequently decreased to a lower value.

Optionally, the high-start regime is selected and implemented when the sensed moisture content is relatively low.

Optionally, the method includes controlling the belt tension according to one or more operating parameters selected by an operator, wherein said operating parameters include one or more of:
- a relationship between the size of the bale in the bale forming zone and the tension in the belt;
- a relationship between the moisture content value and the selection of the operating regime by the control device;
- a maximum value for the tension in the belt;
- a relationship between the power consumption of the baler and the tension in the belt.

Embodiments of the invention will now be described by way of example with reference to the accompanying drawings, wherein:
Figure 1 is an isometric view of a variable chamber round baler;
Figure 2 is a sectional side view of a variable chamber round bale; and
Figures 3a to 3f illustrate a number of alternative predetermined belt tension regimes.

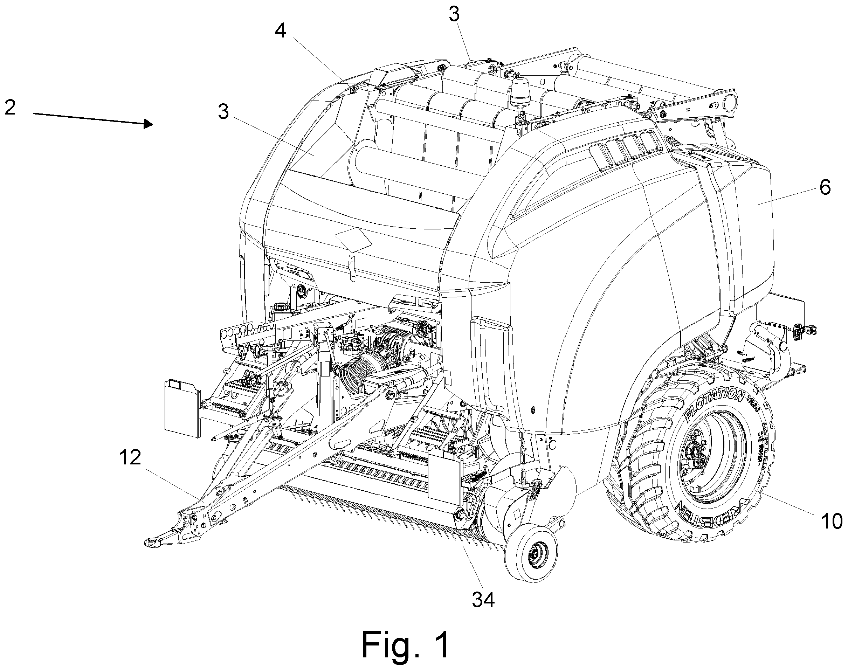

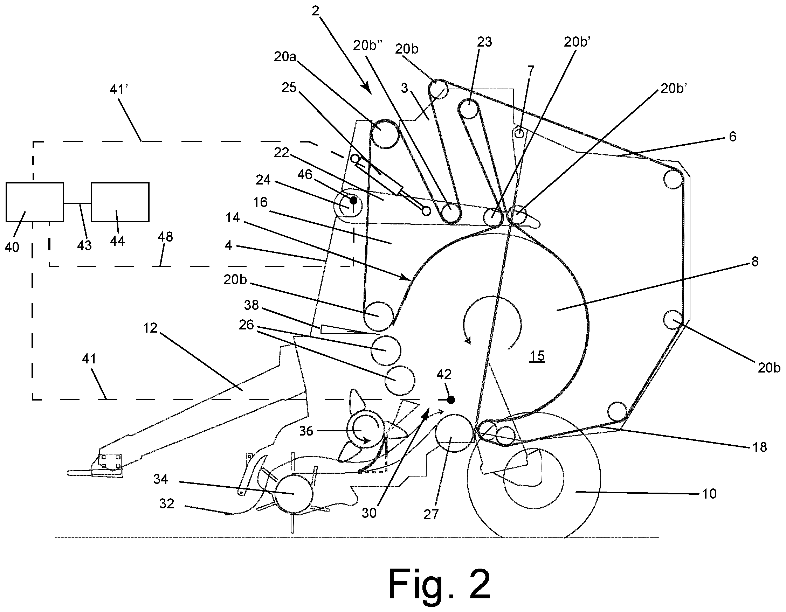

Figures 1 & 2 show the main components of two agricultural variable chamber round balers 2 that embody the invention. Although there are few minor differences between the balers, these differences do not affect the following description of the invention.

The baler 2 includes a frame 3 and a housing 4 having a tailgate 6 that can pivot open about a pivot 7 in the upper part of the housing 4 to release a bale 8. The baler 2 is mounted on wheels 10 and has a drawbar 12 allowing it to be drawn by an agricultural vehicle such as a tractor (not shown). The baler 2 is configured to be driven from the power take off unit (not shown) of the tractor.

The baler 2 includes a bale chamber 14 within which a round (cylindrical) bale 8 of bale material, for example crop material, can be formed. A bale forming zone 15 is provided within the bale chamber 14, the shape of the bale forming zone 15 being defined the side walls 16 of the housing 4 and by one or more endless belts 18 that pass around a set of rollers 20a, 20b. At least one of the rollers is a drive roller 20a that is driven via the power take-off unit and drives the belts 18 causing them to rotate around the rollers 20a, 20b. The other rollers are undriven idler rollers 20b that rotate with the belts 18.

It should be noted in some known variable chamber balers the belts 18 are replaced a different type of flexible pressing element, for example a chain and slat mechanism, which operates in a similar manner to the belts described above. The present invention is also applicable to variable chamber balers of that type. For the sake of conciseness, the term "belt" as used herein is intended to encompass belts and other types of flexible pressing element such as the chain and slat mechanism described above.

Two of the idler rollers 20b comprise tensioning rollers 20b', which are mounted on a tensioning arm 22. An intermediate roller 23 is located in the belt run between the movable rollers 20b'. The intermediate roller 23 guides the belt 18 as it runs from the rear part of the bale chamber 14, around the movable rollers 20b' and the intermediate roller 23, and back to the front part of the bale chamber 14. A third roller 20b" mounted on the arm 22 takes up any slack and effectively tensions the belts 18 as the arm 22 moves. The tensioning arm 22 can be pivoted about a pivot point 24 to accommodate a change in the size of the bale forming zone 15 defined by the belts 18 within the bale chamber 14. For example, as the bale forming zone 15 increases in size the arm 22 will pivot upwards. During a bale forming operation the arm 22 starts in a low position to provide a small bale forming zone 15 and pivots upwards as the bale grows to accommodate the increasing the size of the bale 8.

A belt tensioner 25, for example a hydraulic or electric actuator, is connected between the tensioning arm 22 and the frame 3 and is operable to adjust the pressure on the tensioning arm 22 and the tension in the belts 18. This affects the degree of compression of the bale material and the density of the bale 8.

Optionally, the bale chamber 14 may be defined in part by one or more press rollers 26 and a starter roller 27, which do not engage the belts 18. The press rollers 26 and the starter roller 27 are located on opposite sides of a feed opening 30 through which bale material 32 is fed into the bale chamber 14. The press rollers 26 and the starter roller 27 are normally driven rollers.

The baler also includes a pick-up mechanism 34 for picking up bale material from the ground and feeding it into the bale chamber 14 along a feed path 32. Optionally, a rotating cutter 36 may be provided to chop the bale material as it passes along the feed path 32. The bale material is circulated within the bale chamber 14 and compressed by the rotating belts 18 and the rollers 20a, 20b, 26, 27 thereby forming a round bale 8. When the bale 8 has been formed and has reached the desired diameter it is bound with a suitable binding material, typically twine, net or film, which may be fed into the bale chamber 14 from a binding device 38 between the lowermost idler roller 20b in the front part of the bale chamber 14 and the upper press roller 26 and wrapped around the bale 8. The bound bale can then be ejected from the bale chamber 14 onto the ground by opening the tailgate 6.

All the aforesaid features are conventional and will not therefore be described in further detail.

The baler includes a control device 40, for example an electronic processor, which is linked by control lines 41, 41' or wirelessly to a moisture sensor 42 and the belt tensioner 25. The control device 40 is also linked by a control line 43 or wirelessly to an operator interface 44, which may be located remotely, for example in the cab of a tractor drawing the baler 2. The operator interface 44 may include operator controls and a display for controlling and displaying various operational functions of the baler 2.

The moisture sensor 42 may be located within the bale chamber 14 or in the feed path 32 of bale material from the pick-up mechanism 34 to the bale chamber 14. In the embodiment illustrated in figure 2 the moisture sensor 42 is located in the bale chamber 14 just above the starter roller 27, where it will always be within the bale forming zone 15 defined by the belts 18, regardless of the size of the bale. Optionally a plurality of moisture sensors 42 may be provided in different locations.

Various types of moisture sensor 42 may be employed including electrical resistance sensors, microwave sensors, capacitive sensors or near infrared sensors. The moisture sensor 42 is configured to sense the moisture content of the bale material and generate a moisture content signal that is transmitted to the control device 40 along control line 41.

The control device 40 optionally also receives a bale size signal from a bale size sensor 46, which indicates the current size (for example the circumference or diameter) of the bale 8 in the bale forming zone 15. This bale size signal can for example be obtained by sensing the position of the tensioning arm 22 or the extension of the belt tensioner 25. In the example illustrated in figure 2 the belt size signal is provided by a belt size sensor 46 that is mounted on the pivot 24 of the tensioning arm 22, and is transmitted to the control device 40 along control line 48.

The control device 40 contains, for example in an electronic memory device, a plurality of predetermined belt tension regimes, which provide alternative desired relationships between the belt tension and the bale size. The control device 40 is configured to select and implement one of these belt tension regimes in order to control the density of the bale material in different parts of the bale. The control device 40 selects an appropriate belt tension regime automatically on the basis of the moisture content signal received from the moisture sensor 42 and, optionally, various operational input signals provided via the operator interface 44. The control device 40 then generates a control signal, which is transmitted along control line 41' or wirelessly to the belt tensioner 25 (or to a control device for the belt tensioner, for example a hydraulic valve). The belt tensioner 25 responds to the signal by controlling the pressure on the tensioning arm 22 to adjust the tension in the belt 18 according to the selected belt tension regime. In this way the degree of compression of the bale material in different parts of the bale can be controlled according to the required characteristics of the bale.

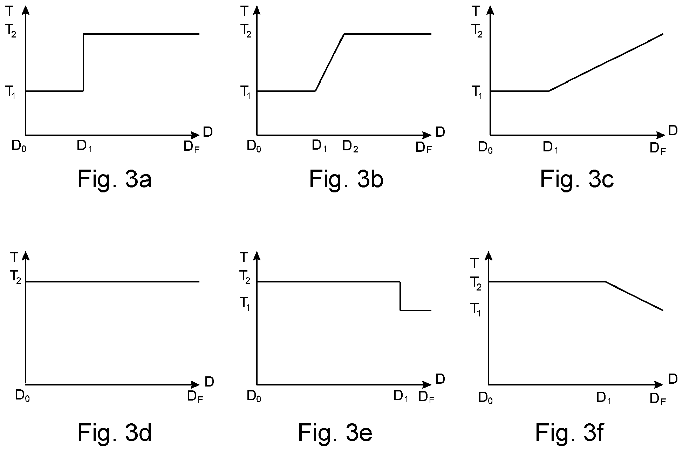

A number of exemplary belt tension regimes are illustrated in graphical form in figures 3a-3f, wherein the axes of the graphs represent the belt tension T and the bale diameter D.

In figure 3a the belt tension is initially set to a relatively low value T₁ and remains at this value as the bale grows from an initial diameter D₀ to a first diameter D₁. The belt tension T is then increased to a higher value T₂ and is maintained at this value until the bale reaches its final diameter D_{F}. This produces a bale with a soft, relatively low density core with a diameter D₁ surrounded by a higher density outer part of the bale.

Figure 3b illustrates a belt tension regime in which the belt tension is initially set to a relatively low value T₁ and remains at that value as the bale grows from an initial diameter D₀ to a first diameter D₁. The belt tension T is then increased gradually to a higher value T₂ as the bale diameter grows to a second intermediate value D₂. The belt tension is then maintained at the higher value T₂ until the bale reaches its final diameter D_{F}. This again produces a bale with a soft, relatively low density core and a higher density outer part of the bale, with an intermediate annular part of the bale where the density increases gradually from the low initial value to the higher final value.

Figure 3c illustrates another belt tension regime for producing a bale with a low density core. Again, the tension starts at a relatively low value T₁ and is maintained at this value until the bale reaches an intermediate diameter D₁ and the belt tension is then increased gradually to the relatively high value T₂ as the bale diameter increases to the final diameter D_{F}.

Figure 3d illustrates a belt tension regime that produces a uniformly dense, high density bale. In this case the belt tension is maintained at a relatively high value T₁ throughout the entire bale forming process, as the bale diameter increases from the initial value D₀ to the final value D_{F}.

In figure 3e the belt tension is initially set to a relatively high value T₂ and is maintained at this value until the bale diameter reaches a diameter D₁, and the belt tension is then reduced to a lower tension T₁ which is maintained until the bale reaches its final diameter D_{F}. This produces a high density bale, where the outer part of the bale has a reduced density so as to reduce the amount of binding material required to bind the bale.

Figure 3f illustrates another belt tension regime which is somewhat similar to the regime illustrated in figure 3e where the belt tension is set to a relatively high value T₂ and is maintained at this level until the bale diameter reaches a value D_{I}, and the tension is then reduced gradually to a lower tension T₁ at the final bale diameter D_{F}. This again produces a relatively high density bale, where the outer part of the bale has a reduced density, thereby reducing the amount of binding material required to bind the bale.

In operation, the control device 40 selects and implements one of these belt tension regimes automatically on the basis of the moisture content signal received from the moisture sensor 42 and, optionally, various operational input signals provided via the operator interface 44, and/or other sensors on the baler. The control device 40 then generates a control signal, which is transmitted along control line 41' or wirelessly to the belt tensioner 25, or to a control device for the belt tensioner, for example a hydraulic valve. The belt tensioner 25 responds to the signal by controlling the pressure on the tensioning arm 22 to adjust the tension in the belt 18 according to the selected belt tension regime.

The control device 40 selects and implements one of belt tension regime automatically in response to changes in the sensed moisture level, for example when the baler moves from one part of a field to another where the crop that forms the bale material has different growth characteristics. This ensures that the baler always operates according to an appropriate belt tension regime, without requiring any intervention by the operator. In this way, the quality of the bale can be improved, excessive use of binding material can be avoided and the energy consumption of the baler can be optimised.

In addition to setting the initial belt tension, the predetermined belt tension regimes can also adjust the belt tension as the size of the bale increases during a bale forming operation, according to the required characteristics of the bale. For example, the control device may be configured to choose automatically between different predetermined belt tension regimes so as to control the shape of the bale based on the moisture content as sensed by the moisture sensor and/or to provide an optimal density of the bale in relation to the power consumption of the baler. For example, when baling material with a high moisture content such as silage, setting the belt tension too high can result in poor energy efficiency owing to high friction between the bale and the side walls of the bale chamber. To avoid this the belt tension may be reduced slightly when the moisture content exceeds a predetermined value.

The predetermined belt tension regimes may optionally include for example controlling and/or adjusting the belt tension from the start of the bale growth, and/or at the end of the bale growth, and/or at one or more intermediate points between the start and end of bale growth, according to the size of the bale.

Optionally, the sensed moisture content value at which a decision is made for selecting an appropriate belt tension regime can be adjusted by the operator and/or automatically by the baler.

In one embodiment the average moisture content of one or more previous bales is taken as a basis for the decision on which predetermined belt tension regime is chosen. In this embodiment, the average moisture content value of the previous bale or bales is sensed and stored, and subsequently this stored value is used as the basis for selecting a belt tension regime for the next bale. The belt tension may then be modified if required according to changes in the moisture content value as the bale is formed.

## Claims

1. A variable chamber baler comprising:
• a bale chamber (14);
• a feed mechanism (30,34) that feeds bale material into the bale chamber (14);
• at least one belt (18) that defines a bale forming zone (15) within the bale chamber (14), wherein bale material is rotated and compressed by the belt (18) within the bale forming zone (15) to form a bale;
• a belt tensioner (25) that controls tension within the belt (18);
• a control device (40) connected to the belt tensioner (25) and configured to control operation of the belt tensioner (25) to adjust the tension of the belt (18) during formation of a bale, and
• a moisture sensor (42) that senses moisture content of the bale material;
• wherein the control device (40) receives a moisture content signal from the moisture sensor (42);
• **characterised in that** the control device (40) comprises a plurality of predetermined belt tension regimes that define alternative relationships between the belt tension and the size of the bale in the bale forming zone (15) during formation of a bale and selects and implements one of the predetermined belt tension regimes according to the received moisture content signal.

2. A variable chamber baler according to claim 1, wherein the control device (40) is configured to adjust the tension of the belt (18) substantially continuously during formation of a bale.

3. A variable chamber baler according to claim 1, wherein the control device (40) is configured to adjust the tension of the belt (18) incrementally during formation of a bale.

4. A variable chamber baler according to any preceding claim, including a bale size detector (46) that detects the size of the bale in the bale forming zone and generates a bale size signal, wherein the control device (40) is connected to receive the bale size signal and is configured to adjust the tension of the belt according to the bale size signal.

5. A variable chamber baler according to any preceding claim, wherein the moisture sensor (42) senses the moisture content of the bale material within the bale forming zone.

6. A variable chamber baler according to any preceding claim, wherein the moisture sensor (42) senses the moisture content of the bale material at the start of the bale forming process and the control device (40) selects and implements one of the predetermined belt tension regimes according to the moisture content of the bale material at the start of the bale forming process.

7. A variable chamber baler according to any preceding claim, wherein the moisture sensor (42) senses the moisture content of the bale material at an intermediate time between the start and the finish of the bale forming process and the control device (40) selects and implements one of the predetermined belt tension regimes according to the moisture content of the bale material at the intermediate time.

8. A variable chamber baler according to any preceding claim, wherein the control device (40) determines an average moisture content value from the received moisture content signal, and selects and implements one of the predetermined belt tension regimes according to the average moisture content value.

9. A variable chamber baler according to any preceding claim, wherein the control device (40) stores a moisture content value based on the moisture content signal received during formation of a first bale, and subsequently during formation of a second bale selects and implements one of the predetermined belt tension regimes according to the stored moisture content value.

10. A variable chamber baler according to any preceding claim, wherein the predetermined belt tension regimes include a low-start regime wherein the belt tension is set at a relatively low value during an initial phase of the bale forming operation, and is subsequently increased to a higher value.

11. A variable chamber baler according to claim 12, wherein the low-start regime is selected and implemented when the sensed moisture content is relatively high.

12. A variable chamber baler according to any preceding claim, wherein the predetermined belt tension regimes include a high-start regime wherein the belt tension is set at a relatively high value during an initial phase of the bale forming operation, and is subsequently decreased to a lower value.

13. A variable chamber baler according to claim 16, wherein the high-start regime is selected and implemented when the sensed moisture content is relatively low.

14. A variable chamber baler according to any preceding claim, wherein the control device (40) includes an operator interface (44) that enables an operator to select one or more operating parameters of the control device, wherein said operating parameters include one or more of:
• a relationship between the size of the bale in the bale forming zone and the tension in the belt;
• a relationship between the moisture content value and the selection of the operating regime by the control device;
• a maximum value for the tension in the belt;
• a relationship between the power consumption of the baler and the tension in the belt.

15. A method of forming a bale in a variable chamber baler that comprises a bale chamber (14), a feed mechanism (30,324) that feeds bale material into the bale chamber, at least one belt (18) that defines a bale forming zone (15) within the bale chamber (14), a belt tensioner (25) that controls tension within the belt (18), a control device (40) that controls operation of the belt tensioner (25) to adjust the tension of the belt (18), and a moisture sensor (42) that senses moisture content of the bale material, the method comprising:
• feeding bale material into the bale chamber (14),
• rotating and compressing the bale material within the bale forming zone (15) to form a bale;
• and sensing the moisture content of the bale material;
• **characterised by** selecting and implementing one of a plurality of predetermined belt tension regimes that define alternative relationships between the belt tension and the size of the bale in the bale forming zone (15) according to the sensed moisture content.

## Patentansprüche

1. Ballenpresse mit variabler Kammer, umfassend:
• eine Ballenkammer (14);
• einen Zufuhrmechanismus (30,34), der Ballenmaterial in die Ballenkammer (14) zuführt;
• mindestens einen Gurt (18), der eine Ballenbildungszone (15) in der Ballenkammer (14) definiert, wobei das Ballenmaterial durch den Gurt (18) in der Ballenbildungszone (15) gedreht und gepresst wird, um einen Ballen zu bilden;
• einen Gurtspanner (25), der die Spannung in dem Gurt (18) regelt;
• eine Steuervorrichtung (40), die mit dem Gurtspanner (25) verbunden und so gestaltet ist, dass sie den Betrieb des Gurtspanners (25) steuert, um die Spannung des Gurts (18) während der Bildung eines Ballens anzupassen, und
• einen Feuchtigkeitssensor (42), der den Feuchtigkeitsgehalt des Ballenmaterials misst;
• wobei die Steuervorrichtung (40) ein Feuchtigkeitsgehaltssignal von dem Feuchtigkeitssensor (42) empfängt;
• **dadurch gekennzeichnet, dass** die Steuervorrichtung (40) eine Mehrzahl vorbestimmter Gurtspannungsregime umfasst, die alternative Beziehungen zwischen der Gurtspannung und der Größe des Ballens in der Ballenbildungszone (15) während der Bildung eines Ballens definieren, und wobei sie eines der vorbestimmten Gurtspannungsregime gemäß dem empfangenen Feuchtigkeitsgehaltssignal auswählt und implementiert.

2. Ballenpresse mit variabler Kammer nach Anspruch 1, wobei die Steuervorrichtung (40) so gestaltet ist, dass sie die Spannung des Gurts (18) während der Bildung des Ballens im Wesentlichen kontinuierlich anpasst.

3. Ballenpresse mit variabler Kammer nach Anspruch 1, wobei die Steuervorrichtung (40) so gestaltet ist, dass sie die Spannung des Gurts (18) während der Bildung des Ballens stufenweise anpasst.

4. Ballenpresse mit variabler Kammer nach einem der vorstehenden Ansprüche, mit einem Ballengrößendetektor (46), der die Größe des Ballens in der Ballenbildungszone erkennt und ein Ballengrößensignal erzeugt, wobei die Steuervorrichtung (40) für den Empfang des Ballengrößensignals verbunden ist und so gestaltet ist, dass sie die Spannung des Gurts gemäß dem Ballengrößensignal anpasst.

5. Ballenpresse mit variabler Kammer nach einem der vorstehenden Ansprüche, wobei der Feuchtigkeitssensor (42) den Feuchtigkeitsgehalt des Ballenmaterials in der Ballenbildungszone misst.

6. Ballenpresse mit variabler Kammer nach einem der vorstehenden Ansprüche, wobei der Feuchtigkeitssensor (42) den Feuchtigkeitsgehalt des Ballenmaterials zu Beginn des Ballenbildungsprozesses misst, und wobei die Steuervorrichtung (40) eines der vorbestimmten Gurtspannungsregime gemäß dem Feuchtigkeitsgehalt des Ballenmaterials zu Beginn des Ballenbildungsprozesses auswählt und implementiert.

7. Ballenpresse mit variabler Kammer nach einem der vorstehenden Ansprüche, wobei der Feuchtigkeitssensor (42) den Feuchtigkeitsgehalt des Ballenmaterials zu einem intermediären Zeitpunkt zwischen dem Beginn und dem Ende des Ballenbildungsprozesses misst, und wobei die Steuervorrichtung (40) eines der vorbestimmten Ballenspannungsregime gemäß dem Feuchtigkeitsgehalt des Ballenmaterials zu dem intermediären Zeitpunkt auswählt und implementiert.

8. Ballenpresse mit variabler Kammer nach einem der vorstehenden Ansprüche, wobei die Steuervorrichtung (40) aus dem empfangenen Feuchtigkeitsgehaltssignal einen durchschnittlichen Feuchtigkeitsgehalt bestimmt und gemäß dem durchschnittlichen Feuchtigkeitsgehalt eines der vorbestimmten Gurtspannungsregime auswählt und implementiert.

9. Ballenpresse mit variabler Kammer nach einem der vorstehenden Ansprüche, wobei die Steuervorrichtung (40) einen Feuchtigkeitsgehaltswert auf der Basis des während der Bildung eines ersten Ballens empfangenen Feuchtigkeitsgehaltssignals speichert und in der Folge während der Bildung eines zweiten Ballens eines der vorbestimmten Gurtspannungsregime gemäß dem gespeicherten Feuchtigkeitsgehaltswert auswählt und implementiert.

10. Ballenpresse mit variabler Kammer nach einem der vorstehenden Ansprüche, wobei die vorbestimmten Gurtspannungsregime ein niedriges Anfangsregime umfassen, wobei die Gurtspannung während einer initialen Phase der Ballenbildungsoperation auf einen verhältnismäßig niedrigen Wert eingestellt ist, und wobei sie in der Folge auf einen höheren Wert erhöht wird.

11. Ballenpresse mit variabler Kammer nach Anspruch 12, wobei das niedrige Anfangsregime ausgewählt und implementiert wird, wenn der gemessene Feuchtigkeitsgehalt verhältnismäßig hoch ist.

12. Ballenpresse mit variabler Kammer nach einem der vorstehenden Ansprüche, wobei die vorbestimmten Gurtspannungsregime ein hohes Anfangsreime umfassen, wobei die Gurtspannung während einer initialen Phase der Ballenbildungsoperation auf einen verhältnismäßig hohen Wert eingestellt ist, und wobei sie in der Folge auf einen niedrigeren Wert gesenkt wird.

13. Ballenpresse mit variabler Kammer nach Anspruch 16, wobei das hohe Anfangsregime ausgewählt und implementiert wird, wenn der gemessene Feuchtigkeitsgehalt verhältnismäßig niedrig ist.

14. Ballenpresse mit variabler Kammer nach einem der vorstehenden Ansprüche, wobei die Steuervorrichtung (40) eine Bedienerschnittstelle (44) umfasst, die es einer Bedienungsperson ermöglicht, einen oder mehrere Betriebsparameter der Steuervorrichtung auszuwählen, wobei die Betriebsparameter einen oder mehrere der folgenden umfassen:
• eine Beziehung zwischen der Größe des Ballens in der Ballenbildungszone und der Spannung in dem Gurt;
• eine Beziehung zwischen dem Feuchtigkeitsgehaltswert und der Auswahl des Betriebsregimes durch die Steuervorrichtung;
• einen maximalen Wert für die Spannung in dem Gurt;
• eine Beziehung zwischen dem Energieverbrauch der Ballenpresse und der Spannung in dem Gurt.

15. Verfahren zur Bildung eines Ballens in einer Ballenpresse mit variabler Kammer, die folgendes umfasst: eine Ballenkammer (14), einen Zufuhrmechanismus (30,324), der Ballenmaterial in die Ballenkammer zuführt, mindestens einen Gurt (18), der eine Ballenbildungszone (15) in der Ballenkammer (14) definiert, einen Gurtspanner (25), der die Spannung in dem Gurt (18) regelt, eine Steuervorrichtung (40), die den Betrieb des Gurtspanners (25) steuert, um die Spannung des Gurts (18) anzupassen, und einen Feuchtigkeitssensor (42), der den Feuchtigkeitsgehalt des Ballenmaterials misst, wobei das Verfahren folgendes umfasst:
• Zuführen von Ballenmaterial in die Ballenkammer (14),
• Drehen und Pressen des Ballenmaterials in der Ballenbildungszone (15), um einen Ballen zu bilden;
• und Messen des Feuchtigkeitsgehalts des Ballenmaterials;
• **gekennzeichnet durch** Auswählen und Implementieren eines einer Mehrzahl vorbestimmter Gurtspannungsregime, die alternative Beziehungen zwischen der Gurtspannung und der Größe des Ballens in der Ballenbildungszone (15) gemäß dem gemessenen Feuchtigkeitsgehalt definieren.

## Revendications

1. Presse à balles à chambre variable comprenant :
• une chambre à balles (14) ;
• un mécanisme de charge (30,34) qui charge du matériau de balles dans la chambre à balles (14) ;
• au moins une courroie (18) qui définit une zone de formation de balles (15) au sein de la chambre à balles (14), le matériau de balles étant mis en rotation et compressé par la courroie (18) au sein de la zone de formation de balles (15) afin de former une balle ;
• un tendeur de courroie (25) qui contrôle la tension au sein de la courroie (18) ;
• un dispositif de contrôle (40) connecté au tendeur de courroie (25) et configuré pour contrôler le fonctionnement du tendeur de courroie (25) afin d'ajuster la tension de la courroie (18) pendant la formation d'une balle, et
• un capteur d'humidité (42) qui capte la teneur en humidité du matériau de balles ;
• le dispositif de contrôle (40) recevant un signal de teneur en humidité à partir du capteur d'humidité (42) ;
• **caractérisé en ce que** le dispositif de contrôle (40) comprend une pluralité de régimes de tension de courroie prédéterminés qui définissent des relations alternatives entre la tension de courroie et la taille de la balle dans la zone de formation de balles (15) pendant la formation d'une balle et sélectionne et applique un des régimes de tension de courroie prédéterminés en fonction du signal de teneur en humidité reçu.

2. Presse à balles à chambre variable selon la revendication 1, le dispositif de contrôle (40) étant configuré pour ajuster la tension de la courroie (18) essentiellement en continu pendant la formation d'une balle.

3. Presse à balles à chambre variable selon la revendication 1, le dispositif de contrôle (40) étant configuré pour ajuster la tension de la courroie (18) progressivement pendant la formation d'une balle.

4. Presse à balles à chambre variable selon l'une quelconque des revendications précédentes, incluant un détecteur de taille de balle (46) qui détecte la taille de la balle dans la zone de formation de balles et génère un signal de taille de balle, le dispositif de contrôle (40) étant connecté afin de recevoir le signal de taille de balle et étant configuré pour ajuster la tension de la courroie en fonction du signal de taille de balle.

5. Presse à balles à chambre variable selon l'une quelconque des revendications précédentes, le capteur d'humidité (42) captant la teneur en humidité du matériau de balles au sein de la zone de formation de balles.

6. Presse à balles à chambre variable selon l'une quelconque des revendications précédentes, le capteur d'humidité (42) captant la teneur en humidité du matériau de balles au début du processus de formation de balles et le dispositif de contrôle (40) sélectionnant et appliquant un des régimes de tension de courroie prédéterminés en fonction de la teneur en humidité du matériau de balles au début du processus de formation de balles.

7. Presse à balles à chambre variable selon l'une quelconque des revendications précédentes, le capteur d'humidité (42) captant la teneur en humidité du matériau de balles à un moment intermédiaire entre le début et la fin du processus de formation de balles et le dispositif de contrôle (40) sélectionnant et appliquant un des régimes de tension de courroie prédéterminés en fonction de la teneur en humidité du matériau de balles au moment intermédiaire.

8. Presse à balles à chambre variable selon l'une quelconque des revendications précédentes, le dispositif de contrôle (40) déterminant une valeur de teneur en humidité moyenne à partir du signal de teneur en humidité reçu, et sélectionnant et appliquant un des régimes de tension de courroie prédéterminés en fonction de la valeur de teneur en humidité moyenne.

9. Presse à balles à chambre variable selon l'une quelconque des revendications précédentes, le dispositif de contrôle (40) stockant une valeur de teneur en humidité fondée sur le signal de teneur en humidité reçu pendant la formation d'une première balle, et ensuite pendant la formation d'une deuxième balle, sélectionnant et appliquant un des régimes de tension de courroie prédéterminés en fonction de la valeur de teneur en humidité stockée.

10. Presse à balles à chambre variable selon l'une quelconque des revendications précédentes, les régimes de tension de courroie prédéterminés incluant un régime de démarrage faible, la tension de courroie étant réglée à une valeur relativement faible pendant une phase initiale de l'opération de formation de balles, et étant ensuite augmentée à une valeur plus élevée.

11. Presse à balles à chambre variable selon la revendication 12, le régime de démarrage faible étant sélectionné et appliqué lorsque la teneur en humidité captée est relativement élevée.

12. Presse à balles à chambre variable selon l'une quelconque des revendications précédentes, les régimes de tension de courroie prédéterminés incluant un régime de démarrage élevé, la tension de courroie étant réglée à une valeur relativement élevée pendant une phase initiale de l'opération de formation de balles, et étant ensuite diminuée à une valeur plus faible.

13. Presse à balles à chambre variable selon la revendication 16, le régime de démarrage élevé étant sélectionné et appliqué lorsque la teneur en humidité captée est relativement faible.

14. Presse à balles à chambre variable selon l'une quelconque des revendications précédentes, le dispositif de contrôle (40) incluant une interface d'opérateur (44) qui permet à un opérateur de sélectionner un ou plusieurs paramètres de fonctionnement du dispositif de contrôle, lesdits paramètres de fonctionnement incluant un ou plusieurs paramètres parmi :
• une relation entre la taille de la balle dans la zone de formation de balles et la tension dans la courroie ;
• une relation entre la valeur de teneur en humidité et la sélection du régime de fonctionnement par le dispositif de contrôle ;
• une valeur maximale pour la tension dans la courroie ;
• une relation entre la consommation d'énergie de la presse à balles et la tension dans la courroie.

15. Procédé pour former une balle dans une presse à balles à chambre variable qui comprend une chambre à balles (14), un mécanisme de charge (30,324) qui charge du matériau de balles dans la chambre à balles, au moins une courroie (18) qui définit une zone de formation de balles (15) au sein de la chambre à balles (14), un tendeur de courroie (25) qui contrôle la tension au sein de la courroie (18), un dispositif de contrôle (40) qui contrôle le fonctionnement du tendeur de courroie (25) afin d'ajuster la tension de la courroie (18), et un capteur d'humidité (42) qui capte la teneur en humidité du matériau de balles, le procédé comprenant les étapes consistant à :
• charger du matériau de balles dans la chambre à balles (14),
• mettre en rotation et compresser le matériau de balles au sein de la zone de formation de balles (15) afin de former une balle ;
• et capter la teneur en humidité du matériau de balles ;
• **caractérisé par** l'étape consistant à sélectionner et appliquer un régime parmi une pluralité de régimes de tension de courroie prédéterminés qui définissent des relations alternatives entre la tension de courroie et la taille de la balle dans la zone de formation de balles (15) en fonction de la teneur en humidité captée.
